# EUROPEAN PATENT APPLICATION

(11) **EP 1 033 679 A1**
(43) Date of publication of application: **06.09.2000**
(21) Application number: 99944856.6
(22) Date of filing: 28.09.1999
(51) Int. Cl.: G06T 1/00, G01B 11/24

(54) **INFORMATION RECORDING DEVICE AND METHOD, MEASURING DEVICE AND METHOD, INFORMATION PROCESSING DEVICE AND METHOD, INFORMATION PROCESSING SYSTEM, AND INFORMATION PROVIDING MEDIUM**

(30) Priority: 28.09.1998 JP 27273398
(71) Applicant: Sony Corporation, Tokyo 141-0001 (JP)
(72) Inventor: YOSHIGAHARA, Takayuki Sony Corporation, Tokyo 141-0001 (JP); KOBAYASHI, Seiji Sony Corporation, Tokyo 141-0001 (JP); SEGAWA, Hiroyuki Sony Corporation, Tokyo 141-0001 (JP)
(74) Representative: Melzer, Wolfgang, Dipl.-Ing.
(86) International application number: JP9905277
(87) International publication number: WO0019370

(57) **Abstract**

A user can safely and simply utilize a three-dimensional shape on his own body. In a three-dimensional measuring system, the three-dimensional shape of each user is measured and compared with a standard model, and feature parameters are produced in correspondence with the comparison result and recorded in the recording device. The feature parameters recorded in the recording device are applied to a character standard model of a win-loss game to generate a character reflecting the body features of the user. The win-loss game is played with a likewise-produced character of another user.

## Description

### Technical Field

The present invention relates to an information recording device and method thereof, measuring device and method thereof, and information processing device and method thereof, an image processing system, and a providing medium, and in particular relates to an information recording device and method thereof, measuring device and method thereof, and information processing device and method thereof, an image processing system which enable a safe use of three-dimensional information on body.

### Background Art

Recently, computer entertainment devices represented by computer game devices have been proliferated and many games have become available for fun to families at lower prices.

However, the conventional devices make people enjoy games with characters designed in advance, and have a problem in that users can not enjoy the games with characters more resembling themselves.

### Disclosure of Invention

The present invention has been made in view of the aforesaid problems, each user can enjoy his own body characteristics by applying them to a game, etc.

In order to solve the aforesaid problem, the present invention provides an information recording device for recording three-dimensional information measured with a measuring device which measures the three-dimensional information on a body, which comprises: a storage means for storing measured data based on the three-dimensional information measured by the measuring device and protection information for protecting the measured data from being read out; and an interface means for performing interface processing of storing the measured data based on the three-dimensional information output from the measuring device in the storage means and of reading out the measured data stored in the storage means to provide an external device.

Further, the present invention provides a measuring device for measuring three-dimensional information on a body and for outputting measured data based on the three-dimensional information to an information recording device, which comprises: a measuring means for measuring the three-dimensional information on the body; an input means for inputting protection information for protecting the measured data based on the three-dimensional information on the body from being read out from the information recording device; and an interface means for outputting the measured data based on the three-dimensional information measured by the measuring means and the protection information input with the input means to the information recording device.

Further, the present invention provides a measuring method of measuring three-dimensional information on a body and of outputting measured data based on the three-dimensional information to an information recording device, which comprises: a measuring step of measuring three-dimensional information on the body; a input step of inputting protection information for protecting the measured data based on the three-dimensional information on the body from being read out from the information recording device; and an output step of outputting the measured data based on the three-dimensional information measured by the measuring step and the protection information input at the input step to the information recording device.

Further, the present invention provides an information providing medium for measuring three-dimensional information on a body and for providing an information processing device with control information for outputting measured data based on the three-dimensional information to an information recording device. The control information includes: a measuring command to measure the three-dimensional information on the body; an input command to input protection information for protecting the measured data based on the three-dimensional information on the body from being read out from the information recording device; and an output command to output the measured data based on the three-dimensional information measured based on the measuring command and the protection information input based on the input command.

Further, the present invention provides an information processing device for reading out measured data from an information recording device which records the measured data based on three-dimensional information on a body and protection information for protecting the measured data from being read out, and for performing prescribed processing, the information processing device, which comprises: an interface means for performing interface processing to read out the measured data and the protection information from the information recording device; an input means for inputting authentication information for authenticating the reading-out of the measured data from the information recording device; an authenticating means for reading out the protection information from the information recording device through the interface means and for performing authentication processing using the authentication information input by the input means; a control means for controlling the reading-out of the measured data from the information recording device in accordance with the authentication result by the authenticating means; and a processing means for performing prescribed processing utilizing the measured data which is read out from the information recording device through the interface means under the control of the control means.

Further, the present invention provides an information processing method of reading out measured data from an information recording device which records the measured data based on three-dimensional information on a body and protection information for protecting the measured data from being read out, to perform prescribed processing. The information processing method comprises: an input step of inputting authentication information for authenticating the reading-out of the measured data from the information recording device; an authenticating step of reading out the protection information from the information recording device and of performing authentication processing using the authentication information input at the input step; a control step of controlling the reading-out of the measured data from the information recording device in accordance with the authentication result of the authenticating step; and a processing step of performing prescribed processing using the measured data read out from the information recording device under the control of the control step.

Further, the present invention provides an information processing system composed of a measuring device for measuring three-dimensional information on a body, an information recording device for recording measured data based on the three-dimensional information measured by the measuring device, and an information processing device for reading out the measured data from the information recording device and performing prescribed processing. The information recording device comprises: a first storage means for storing measured data based on the three-dimensional information measured by the measuring device and protection information for protecting the measured data from being read out; and a first interface means for performing interface processing of storing measured data based on the three-dimensional information output from the measuring device in the storage means and of reading out the measured data stored in the storage means to provide an external device. The measuring device comprises: a measuring means for measuring three-dimensional information on the body; a first input means for inputting protection information for protecting the measured data based on the three-dimensional information of the body from being read out from the information recording device; and a second interface means for outputting the measured data based on the three-dimensional information measured by the measuring means and protection information input by the input means, to the information recording device. The information processing device comprises: a third interface means for performing interface processing of reading out the measured data and the protection information from the information recording device; a second input means for inputting authentication information for authenticating the reading-out of the measured data from the information recording device; an authenticating means for reading out the protection information from the information recording device through the interface means and for performing authentication processing utilizing the authentication information input by the input means; a control means for controlling the reading-out of the measured data from the information recording device in accordance with the authentication result of the authenticating means; and a processing means for performing prescribed processing utilizing the measured data read out from the information recording device through the interface means under the control of the control means.

Further, the present invention provides an information processing method in an information processing system composed of a measuring device for measuring three-dimensional information on a body, an information recording device for recording measured data based on the three-dimensional information measured by the measuring device, and an information processing device for reading out the measured data from the information recording device and performing prescribed processing. An information processing method of the measuring device comprises: a measuring step of measuring three-dimensional information on the body; a first input step of inputting protection information for protecting the measured data based on the three-dimensional information on the body from being read out from the information recording device; and an output step of outputting the measured data based on the three-dimensional information measured by the measuring step and the protection information input at the input step, to the information recording device. An information processing method of the information processing device comprises: a second input step of inputting authentication information for authenticating the reading-out of the measured data front the information recording device; an authenticating step of reading out the protection information from the information recording device and of performing authentication processing utilizing the authentication information input at the input step; a control step of controlling the reading-out of the measured data from the information recording device in accordance with the authentication result of the authenticating step; and a processing step of performing prescribed processing utilizing the measured data read out from the information recording device under the control of the control step.

Furthermore, the present invention provides an information providing medium for providing control information for executing processing for an information processing system composed of a measuring device for measuring three-dimensional information on a body, an information recording device for recording measured data based on the three-dimensional information measured by the measuring device, and an information processing device for reading out the measured data from the information recording device and performing prescribed processing. Control information which is provided the measured device includes: a measuring command to measuring three-dimensional information on the body; a first input command to input protection information for protecting the measured data based on the three-dimensional information on the body from being read out from the information recording device; and an output command to output the measured data based on the three-dimensional information measured by the measuring step and the protection information input at the input step, to the information recording device. And, control information which is provided the information processing device comprises: a second input command to input authentication information for authenticating the reading-out of the measured data from the information recording device; an authenticating command to read out the protection information from the information recording device and to perform authentication processing utilizing the authentication information input at the input step; a control command to control the reading-out of the measure data from the information recording device in accordance with the authentication result of the authenticating step; and a processing command to perform prescribed processing utilizing the measured data read out from the information recording device under the control of the control step.

### Brief Description of Drawings

Fig. 1 is a block diagram showing a configuration example of the shape and texture data measuring device and a recording device to which the present invention is applied.
Fig. 2 is a flow chart explaining the processing of the shape and texture data measuring device 1 of Fig. 1.
Fig. 3 is a flow chart explaining the details of the three-dimensional shape and texture measuring processing in step S1 of Fig. 2.
Fig. 4 is a flow chart explaining the details of the processing to generate feature parameters in step S2 of Fig. 2.
Fig. 5 is a flow chart explaining the details of the security information input processing in step S3 of Fig. 2.
Fig. 6 is a diagram explaining the classified structure of the three-dimensional shape data in the memory 22 of the recording device 2 of Fig. 1.
Fig. 7 is a block diagram showing a configuration example of the application system to which the present invention is applied.
Fig. 8 is a flow chart explaining the operation of the application system 41 of Fig. 7.
Fig. 9 is a flow chart explaining the details of the processing to read in the three-dimensional shape and the texture in step S51 of Fig. 8.
Fig. 10 is a flow chart explaining the details of the processing to synthesize the three-dimensional images in step S52 of Fig. 8.
Fig. 11 is a drawing to show a configuration example of the system to which the present invention is applied.
Fig. 12 is a diagram explaining a hardware configuration in the case of performing the shape and texture data measuring processing with software.
Fig. 13 is a diagram explaining a hardware configuration in the case of performing the applications using the storage device 2 with software.
Fig. 14 is a diagram explaining a hardware configuration in the case where the storage device 2 is used as an information processing device connected to a network.

### Best Mode for Carrying Out the Invention

An embodiment of the present invention will be described with reference to the drawings below.

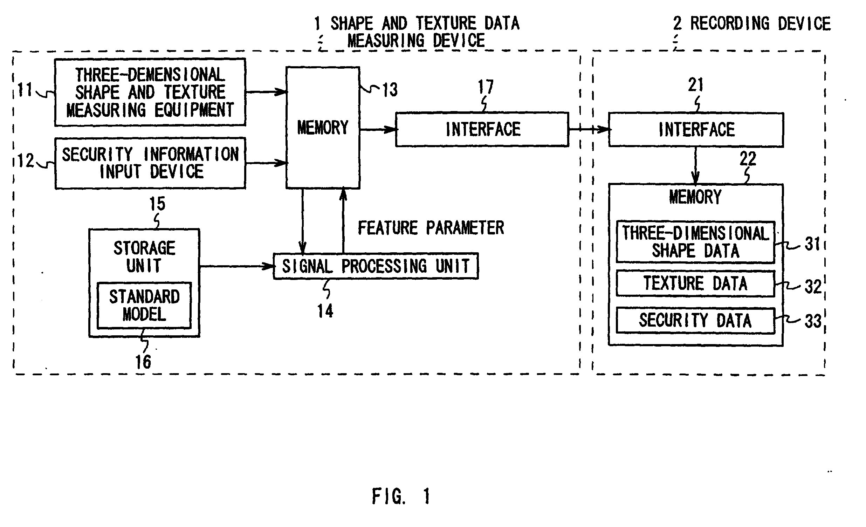

Fig. 1 shows a configuration example of a shape and texture data measuring device 1 and a recording device 2 to which the present invention is applied. A three-dimensional shape and texture measuring equipment 11 of the shape and texture data measuring device 1 measures the three-dimensional shape and surface texture of a human body, and outputs three-dimensional shape data and the texture data to a memory 13. The measuring method of the three-dimensional shape may be any of active ones such as the light-cutting method using slit light, the method using *moire*, and the method using pattern light, and passive ones measuring only from images such as the stereo method using a plurality of cameras. In addition, for acquisition of texture, for example a CCD video camera is used. The texture data also includes information showing which part of the three-dimensional shape data the texture data are corresponding to.

The security information input device 12 is used to input authenticating information on users (people to be measured) so as to limit the dishonest access to the data recorded in the recording device 2. In the case where this authenticating information is a user's name and a password for example, the security information input device 12 is composed of character input devices such as a keyboard, a touch panel, a pen tablet. Further, in the case where the information such as finger prints is used as the authenticating information, the security information input device 12 is composed of image input devices such as a CCD video camera. Furthermore, in the case where the information such as sound spectrogram is used as the authenticating information, the security information input device 12 is composed of voice input devices such as a microphone. In addition, the security information input device 12 can be composed of any optional combination of the aforementioned devices. Incidentally, the security information input device 12 can be omitted in the case where it is not necessary to protect data.

The memory 13 memorizes the outputs from the three-dimensional shape and texture measuring equipment 11 and the outputs from the security information input device 12. The memory 13 can be composed of recording media such as a hard disc, an optical magnetic disk, or otherwise, an solid memory which memorizes data statically. The signal processing unit 14 is composed of a personal computer, etc., and compares the three-dimensional shape data and the texture data which are measured by the three-dimensional shape and texture measuring equipment 11 with data of the standard model 16 stored in the storage unit 15 to generate feature parameters. Generating feature parameters in this way enable the compression of data. The signal processing unit 14 and the storage unit 15 can be omitted in the case where feature parameters are not produced (the data are not compressed).

The standard model 16 is a model having, for example, a three-dimensional shape and surface texture data of a standard human body. The storage unit 15 may be a separated storage region of the memory 13, or of course can be an independent device from the memory 13. The standard model 16 may be provided under a state that it is stored in the storage unit 15 in advance, or may be transmitted through a network and so on, and be taken in to the interface to be stored in the storage unit 15.

The interface 17 executes interface processing for exchanging data between the shape and texture data measuring device 1 and an external device. In the example of Fig. 1, the interface processing with the recording device 2 is executed.

The recording device 2 has functions to record the three-dimensional shape and texture data supplied by the shape and texture data measuring device 1 and to provide an external device with the recorded data. The recording device 2 may be composed of a server (a computer) connected to the network. In this case, the interface 17 of the shape and texture data measuring device 1 and the interface 21 of the recording device 2 each is composed of an Ethernet interface card, etc., and to mutually exchange data between them. In the case where the recording device 2 is attachable/detachable to/from the shape and texture data measuring device 1 and is composed of a floppy disk and an optical magnetic disk, etc., which are portable, the interface 17 of the shape and texture data measuring device 1 is composed of a drive to write in data stored in the recording device 2 and an interface. In this case, the interface 17 itself writes data in the memory 22, so that the interface 21 is unnecessary. Otherwise, the recording device 2 can be composed of a portable information memory such as a memory card having a semiconductor memory, and an IC card having a semiconductor and a controller.

The memory 22 of the recording device 2 is a rewritable non-volatile memory and, for example, is composed of a flash memory, etc. Otherwise, the memory 22 can be composed of a SRAM or a DRAM combined with a battery. In the case where the recording device 2 is a server, it is composed of a hard disk or an optical magnetic disk, or the like. In this case, the interface 21 operates as a drive to read data from the memory 22.

The memory 22 memorizes the three-dimensional shape data (to be feature parameters in the case where the data are subject to compression) 31 and the texture data 32 which compose feature parameters and which are supplied via the interface 21 from the interface 17 of the shape and texture data measuring device 1. In addition, the memory 22 memorizes the security data 33 inputted from the security information input device 12 of the shape and texture data measuring device 1.

Anything can be used as three-dimensional shape data of a human body as long as it can express three-dimensional shape, and for example, it can be expressed with a polygon. Anything can be used as texture data as long as it a color information on surface of the three-dimensional shape of a body, and for example, it can be expressed with image information corresponding to each polygon. Anything can be used as security data as long as it can authenticate users, and for example, it can comprise user names, passwords, finger print patters, etc. The security data are preferably encoded. In addition, for example in the case where the security data comprises finger print patterns, etc., it can be used as texture data.

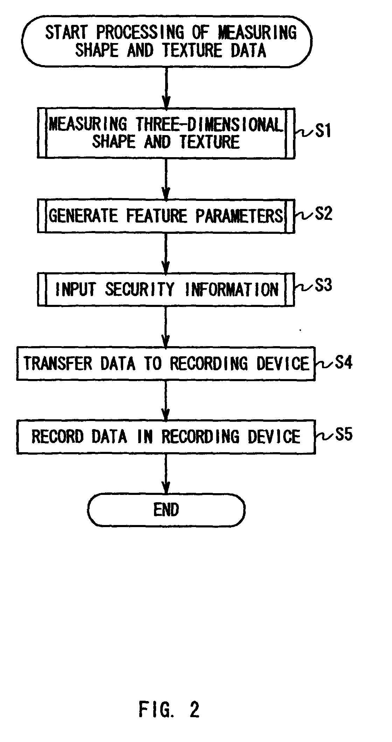

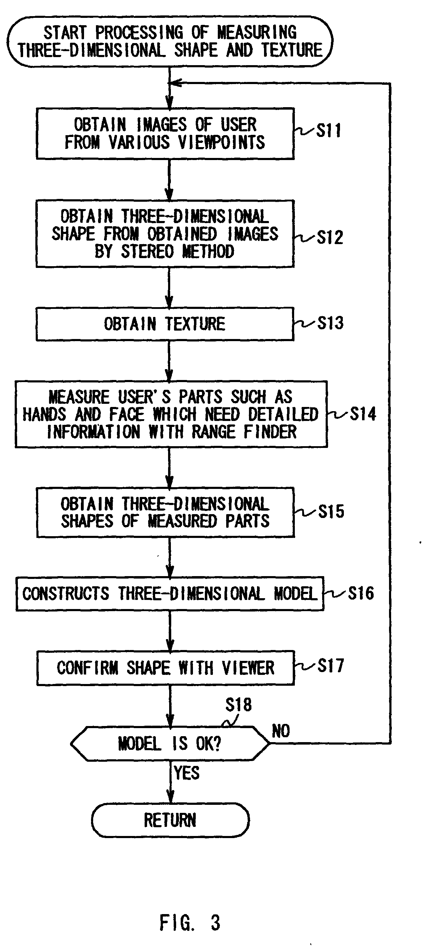

Next, with reference to the flow chart of Fig. 2, the shape and texture data measuring processing in the system of Fig. 1 will be explained. At first, in step S1, the three-dimensional shape and texture measuring equipment 11 measures the three-dimensional shape and texture of a human (user's) body. The data obtained as a result of measuring is supplied to the memory 13 to be stored. Incidentally, this three-dimensional shape and texture measuring processing will be described in detail later with reference to the flow chart of Fig. 3.

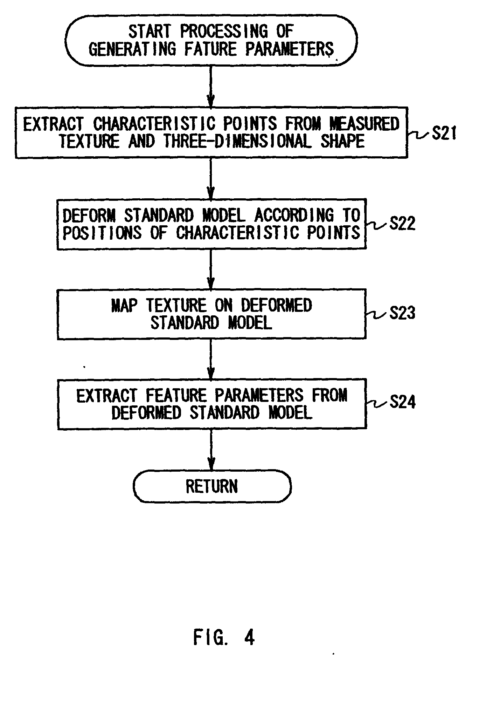

Next, the stage proceeds to step S2, and the signal processing unit 14 compares the three-dimensional shape data and the texture data stored in the memory 13 with the three-dimensional shape data and the texture data of the standard model 16 stored in the storage unit 15, and generates feature parameters from the comparison results. This processing will be described in detail later with reference to the flow chart of Fig. 4. Incidentally, this processing to generate feature parameters is to compress the three-dimensional shape data and the texture data which are obtained in step S1, and is omitted in the case where the compression is not necessary.

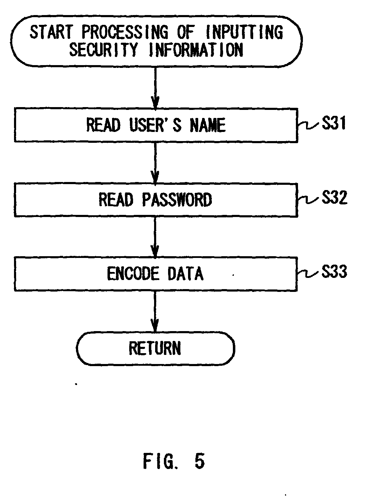

After producing the feature parameters, the stage proceeds to step S3, and the security information input device 12 executes processing of inputting security information on users (people to be measured). The inputted security information is supplied to the memory 13 and stored. Incidentally, this security information inputting processing will be described in detail later with reference to the flow chart of Fig. 5.

Next, the stage proceeds to step S4, the feature parameters (or the three-dimensional shape data), the texture data, and the security information recorded in the memory 13 are transferred to the recording device 2 via the interface 17 to be recorded. In step S5, the interface 21 of the recording device 2 supplies the memory 22 with the data supplied from the shape and texture data measuring device 1 to record it.

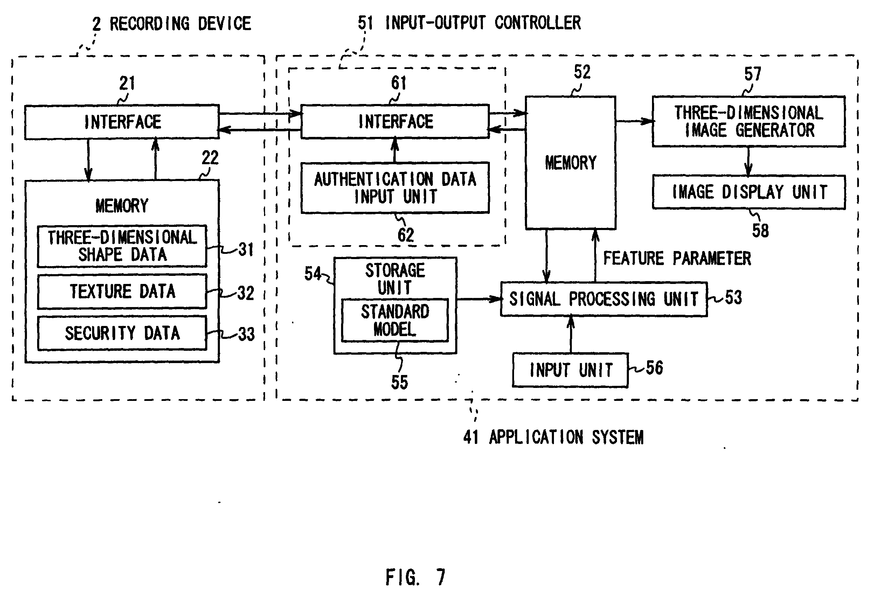

In the case where the recording device 2 is a portable type, a user can bring a recording device which has data of his own body and go to a predetermined place, and can use an information processing device (for example, an application system 41 of Fig. 7 described later) there to utilize the data of his own body. In the case where the recording device 2 is composed of a server, etc., each user provides his own data via a network to a predetermined device and use it. Such a method of utilization will be described later with reference to Fig. 7.

Next, the three-dimensional shape and texture measuring processing in step S1 of Fig. 2 will be explained in detail with reference to the flow chart of Fig. 3. Here, a stereo camera is used to measure the approximate shape of a body, and a range finder is used to measure the detailed shapes of a face and hands, etc. Incidentally, the stereo camera is to use images from a plurality of viewpoints to obtain three-dimensional information, and its details are disclosed in, for example, 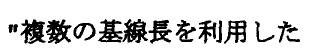 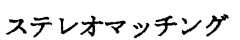 (Stereo matching utilizing a plurality of base-line lengths)" by Okutomi and Kanade, Shingakuron (D-II), Vol. J-75-D-II, No. 8, pp. 1317-1327, Aug. 1992. In addition, a range finder is to use laser light to obtain more accurate three-dimensional information, and its details are disclosed in, for example, 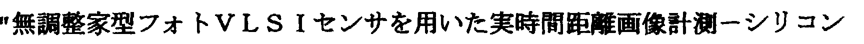 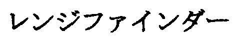 (Real-time distance image measurement using non-adjusting type photo VLSI sensor - silicon range finder)" by Yokoyama, Satoh, Ashigahara, and Iguchi, Singakuron (D-II), Vol. J79-D-II, No. 9, Sep. 1996.

At first, in step S11, the three-dimensional shape and texture measuring equipment 11 picks up images of a user with a plurality of video cameras from various viewpoints so as to obtain a plurality of images. In step S12, from a plurality of images obtained in step S11, a three-dimensional shape is computed by the stereo method. In step S13, from a plurality of images obtained in step S11, the texture data corresponding to the three-dimensional shape computed in step S12 is obtained.

Next, in step S14, user's parts such as hands and a face which need detailed information are measured with a range finder. In step S15, the three-dimensional shapes of user's body parts such as a face and hands which need detailed information are obtained from the data obtained as measurement results of step S14.

In step S16, the three-dimensional shape and texture measuring equipment 11 constructs a three-dimensional model from the data obtained in step S12 and the data obtained in step S15. In step S17, the three-dimensional shape and texture measuring equipment 11 displays the three-dimensional model, which is constructed in step S16, on a display with a three-dimensional image display tool, etc. and confirms such as whether or not the three-dimensional model has a portion which lacks data, and whether or not any failure exists. In step S18, as a result of confirmation in step S17, if there are no problems in the constructed three-dimensional model in any event, the processing gets over, and if there are any problems, the stage returns to step S11 to execute the succeeding processing repeatedly.

Next, with reference to the flow chart of Fig. 4, the feature parameters producing processing in step S2 will be explained in detail. At first, in step S21, the signal processing unit 14 extracts characteristic points from the three-dimensional shape and texture data measured in step S1. Here, a characteristic point is an appropriately set point representing the characteristics of a face such as a corner of an eye and a nose top, or representing a body shape such as shoulders, elbows, and wrists. The characteristic points can be extracted in such a method that, for example, colored seals or ping-pang balls as markers are attached to a body so as to clearly distinguish the characteristic points from the other parts of the body and then the markers are extracted with image processing. Otherwise, using the three-dimensional knowledge on a face or a body such as, for example, "having two eyes above the nose," it is possible to extract characteristic points automatically from the three-dimensional shape data and texture data.

In step S22, the signal processing unit 14 deforms the shape of the standard model 16 so that the characteristic points of the standard model 16 stored in the storage unit 15 correspond with the characteristic points extracted in step S21. The standard model is also expressed as a three-dimensional model demonstrating a standard shape of a body, for example, with a polygon.

In step S23, onto the standard model having the shape deformed in step S22 (hereinafter to be referred to as deformed standard model), the texture data obtained as a measurement result of step S1 are mapped. This corrects the texture data, which is obtained as the measurement result of, in accordance with positions of the characteristic points. Further, these texture data is corrected so as to correspond to the coordinate of texture data of the standard model.

That is to say, basically, it is necessary to record in the recording device 2 the correspondence between the deformed standard model and the texture coordinate (the texture data of which coordinate should be pasted onto each polygon of the deformed standard model). However, this will make the quantity of data grow larger. Therefore, the texture data obtained as the measurement result is to be corrected (deformed) so as to correspond to the texture data of the standard model, and to be recorded in the recording device 2. This allows the three-dimensional image producing device (restored device) to execute restoring processing, in the case of producing (restoring) the three-dimensional image of a user's body, in such a method that feature parameters read out from the recording device 2 are applied to a built-in standard model to generate a deformed standard model and then, the texture data (corresponding to the standard model) read out from the recording device 2 is pasted onto the deformed standard model as in the case where the texture data of a standard model is pasted onto a standard model (the correspondence relationship between the texture data of a standard model and the standard model is previously held by the restored device).

After completing the deformation processing on the standard model, processing to extract feature parameters from the deformed standard model is executed in the following step S24. The feature parameters are data representing the characteristics of a personal face and body, such as the sizes of an eye and a nose, and it is desirable that they are data which can reproduce the user's characteristics by being applied to any three-dimensional model.

Moreover, the security information input processing of step S3 will be explained with reference to the flow chart of Fig. 5. Here, users' names and passwords are to be used as security information. At first, in step S31, the security information input device 12 reads in the user's name. Moreover, in step S32, the security information input device 12 reads in his password. That is, in this case, the user or a person who manipulates the shape and texture data measuring device 1 utilizes a keyboard, etc. to input the user's name and password. It is desirable to input the password several times to prevent inputting mistakes. Next, in step S33, the security information input device 12 encodes the user's name and password inputted in step S31 and step S32. Encoding security information can further improve the nature of safety.

In this way, the three-dimensional shape data (feature parameters) 31, the texture data 32, and the security data 33 are recorded in the memory 22 of the recording device 2.

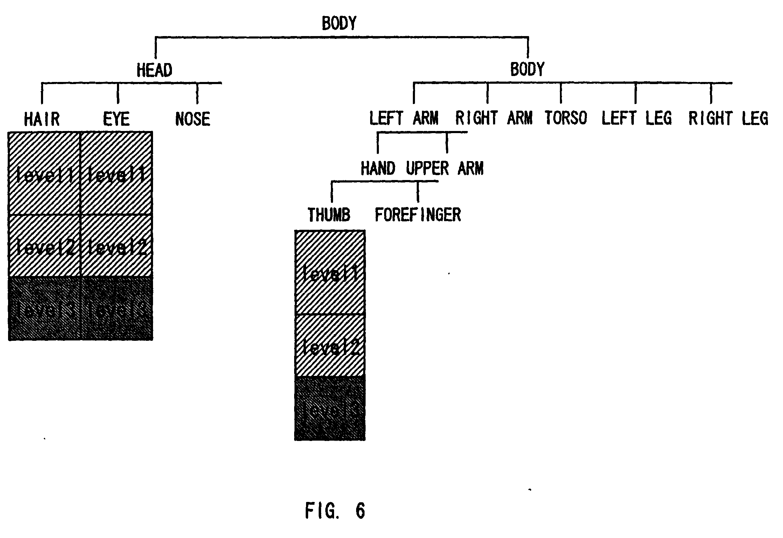

The signal processing unit 14 generates feature parameters in classes as shown in Fig. 6 when producing feature parameters (likewise in the case where the three-dimensional shape data are recorded as they are without being compressed). That is, a body is roughly divided into the head and the body, and the head is further divided into the hair, the eyes, and the nose, etc. In addition, the body is divided into the left arm, the right arm, the torso, the left leg, and the right leg, etc. Furthermore, the left arm, for example, is further divided into the hand, and the upper arm, etc. In addition, the hand is further divided into the thumb, and the forefinger, etc.

Thus, each part of a body is classified on a portion-by-portion basis, and the ultimate feature parameters for each class are further classified in accordance with the detailed nature. For example, as feature parameters of a thumb, the data on length and thickness are regulated as the parameter of level 1. Moreover, for the level 2 being lower than the level 1 a parameter such as nail width and length of the thumb, etc. are regulated. Moreover, for the level 3 being lower than the level 2 a parameter for wrinkles on the thumb are regulated. Thus, by classifying the feature parameters in accordance with the detailed nature, a party who uses these can properly select feature parameters up to a preferable detailed level for use.

Each application requires different portions of the body data and requires different accuracy thereof. Under the circumstances, by recording the body data in classes on a portion-by-portion basis in this way, a party who uses this will be able to rapidly read predetermined data in accordance with required detailed nature and to utilize it.

In the case where the recording device 2 is a portable type, the user who records the three-dimensional information of his own body in the recording device 2 in this way can mounted it onto a predetermined device, and can utilize the three-dimensional information recorded therein. On the other hand, in the case where the recording device 2 is comprised of, for example, a server, the user provides the information to a predetermined device through a network so as to utilize the three-dimensional information.

Fig. 7 shows an example of configuration in such a case. The application system 41 is a system which utilizes the three-dimensional information recorded in the recording device 2. An input-output controller 51 has an interface 61 and an authentication data input unit 62. The interface 61 executes interface processing to exchange data with the recording device 2. This interface 61 can be configured as a contact type and as a non-contact type. In the case where the recording device 2 is a server, the interface 61 is composed of, for example, an Ethernet interface card, etc. In the case where the recording device 2 is attachable/detachable to/from an application system 41 and is composed of a portable floppy disk or optical-magneto disc, the interface 61 of the application system 41 is configured as a drive to read its medium. In this case, the interface 61 itself can read information from the memory 22m so that the interface 21 is unnecessary. Otherwise, the recording device 2 can be composed of a portable information storage device such as a memory card and IC card.

The authentication data input unit 62 is used to input data corresponding to the security data 33 recorded in the memory 22 of the recording device 2 as authentication data. And in this case, the security data 33 is comprised of a user's name and password, thus also here the user's name and password are to be inputted. In the case where finger prints are used as the security data 33, information on finger prints are to be inputted from the authentication data input unit 62. The authentication data input unit 62 is composed of a character input device such as a keyboard, a touch panel, and a pen tablet in the case of inputting the user's name and password, and on the other hand, is composed of an image input device such as a CCD video camera in the case where the authentication data is comprised of finger prints.

The memory 52 is a unit to memorize data inputted by the input-output controller 51, and is composed of a recording medium such as a static solid memory, a hard disk, and an optical-magneto disk. The signal processing unit 53 is composed of, for example, a computer which executes processing to reconstruct three-dimensional shape data from feature parameters stored in the memory 52 based on data of the standard model 55 stored in the storage unit 54. An input unit 56 is manipulated by a user and inputs a corresponding signal to the signal processing unit 53. In the case where the data stored in the memory 52 (the data recorded in the memory 22 of the recording device 2) are not feature parameters but three-dimensional shape data, the signal processing unit 53 and the storage unit 54 can be omitted. As the storage unit 54, a different region of the same hardware as the memory 52 may be used, or a hardware independent from the memory 52 may be used. The data of the standard model 55 may be stored in the application system 41 under a state of being stored in the storage unit 54, or the data transmitted from a network via the interface 61 may be stored in the storage unit 54.

The three-dimensional image generator 57 is a unit to generate the three-dimensional image of a body from the feature parameters (three-dimensional shape data) and the texture data read out from the memory 52, and can be composed of, for example, a three-dimensional computer graphics accelerator. In addition, the three-dimensional image generator 57 accepts a command which the user inputted by manipulating the input unit 56, and in correspondence with this command, deforms, rotates, and shifts the shape of the three-dimensional model on a real time basis. An image display unit 58 is composed of a CRT, and LCD, etc. to display the three-dimensional image produced by the three-dimensional image generator 57.

The application system 41 may be composed of a hardware in which the units from the input-output controller 51 to the image display unit 58 are integrated, or may be composed of a unit in which the units other than the image display unit 58 are integrated.

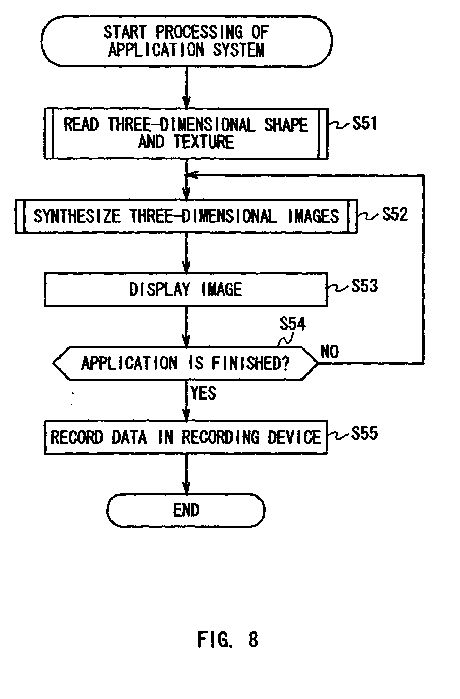

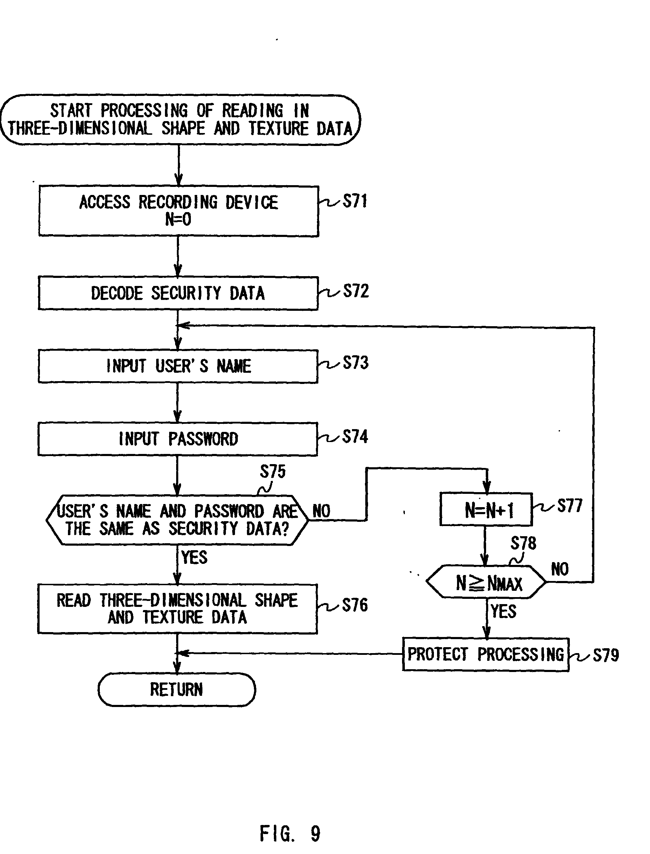

Next, by using a television game as an example, the operation of application system 41 will be explained with reference to Fig. 8. When the user mounts the recording device 2 onto the application system 41, the interface 61 executes processing to read the feature parameters (three-dimensional shape data) and the texture data from the recording device 2. The read data are transferred from the interface 61 to the memory 52 to be stored. Incidentally, the processing to read the three-dimensional shape and the texture will be described in detail later with reference to the flow chart of Fig. 9.

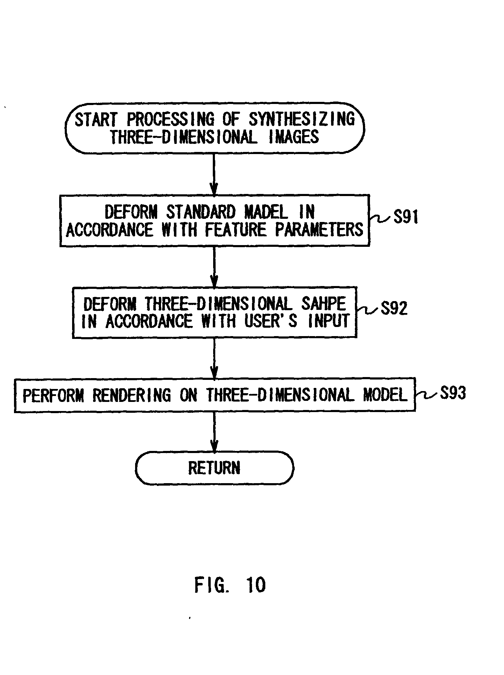

When the feature parameters (three-dimensional shape data) and the texture data are completely read in, processing to synthesize three-dimensional images is executed in step S52. That is, at this time, the signal processing unit 53 applies the feature parameters stored in the memory 52 to the data of the standard model 55 stored in the storage unit 54, in order to restore the three-dimensional shape data and the texture data of the user's body which are then stored into the memory 52. The three-dimensional image generator 57 generates the three-dimensional image based on the three-dimensional shape data and the texture data stored in the memory 52. The processing to synthesize the three-dimensional images in step S52 will be described in detail later with reference to the flow chart of Fig. 10. In step S53, the three-dimensional image produced in step S52 are displayed on the image display unit 58.

In step S54, the signal processing unit 53 and the three-dimensional image generator 56 determine whether or not the end of the game (the end of the application) is inputted from the input unit 56 by the user. In the case where the user does not input yet, the stage goes back to step S52, and repeatedly executes the succeeding processing. On the other hand, in the case where it is determined in step S54 that the game is finished by a command, the stage goes forward to step S55, and the signal processing unit 53 commands to record data such as the game results, etc. Based on this command, the interface 61 requests the interface 21 to write in the data such as the game results, etc. The interface 21 records those data into the memory 22 in response to this request. Therefore, data representing the ongoing progress of a game is stored in the memory 22 in the case of a game like a role playing game in which the succeeding story changes depending on the ongoing progress. Incidentally, such a processing to record data may be performed during the game, not at the time when the game is over. Further, such a processing may be performed only when the user requests recording in response to the inquiry whether or not such data should be recorded, and on the other hand, if the recording is not requested, such historical data may not be recorded.

Next, with reference to the flow chart of Fig. 9, the processing to read in the three-dimensional shape and texture data in step S51 of Fig. 8 will be explained. At first, in step S71, the interface 61 accesses the interface 21 of the recording device 2 and initializes the variable N representing how many times the security data was authenticated to set to 0. The interface 21 of the recording device 2 is accessed by the interface 61, then reads out the security data 33 stored in the memory 22 to transmit it to the interface 61. In step S72, the interface 61 decodes the security data 33 supplied from the interface 21 to make the built-in memory memorize them.

Next, the interface 61 generates a message for inputting the user's name and password, and supplies it to the image display unit 58 via the memory 52 and the three-dimensional image generator 57 for display. The user inputs the user's name and the password with the authentication data input unit 62 in step S73 and step S74 in accordance with the message displayed on the image display unit 58.

In step S75, the interface 61 compares the security data 33, which was read out from the memory 22 of the recording device 2, decoded in step S72 with the user's name and the password which have been inputted in steps S73 and S74 to determine whether or not the respective data are the same as the security data. When the user's name and the password both are not the same as the security data, the stage goes forward to step S77, and the interface 61 increments the variable N by 1. Then, in step S78, the interface 61 determines whether or not the variable N is equal to the previously set maximum value N_{MAX} or is larger than that value. When the variable N is smaller than the value N_{MAX}, the stage goes back to step S73 to execute the succeeding processing repeatedly. That is, when the user's name and the password both are not the same as the security data, the user's name and the password are both inputted again.

When it is determined in step S75 that the inputted user's name and password are the same as the user's name and password read out from the recording device 2, the stage goes forward to step S76, and the interface 61 requests the interface 21 to read out the feature parameters (three-dimensional shape data) and the texture data. In response to this request, the interface 21 reads out the three-dimensional shape data (feature parameters) 31 and the texture data 32 from the memory 22 to transmit them to the interface 61. The interface 61 supplies the memory 52 with the three-dimensional shape data (feature parameters) 31 and the texture data 32 transferred from the interface 21, for memorization.

When it is determines in step S78 that the variable N is equal to or larger than the maximum value N_{MAX}, that is, when the user's name and the password are repeatedly inputted and not the same as the security data previously stored in the recording device 2 for N_{MAX} times, the stage goes forward to step S79 and the interface 61 executes the protection processing. That is, at this time, the interface 61 requests the interface 21 to write in the not-usable flag or to rewrite all the three-dimensional shape data 31 and the texture data 32 to the 0 data (to rewrite them to invalid data). In response to this request, the interface 21 records the not-usable flag in the memory 22, or overwrites the 0 data on the three-dimensional shape data 31 and the texture data 32 (updates to the invalid data). This certainly prevents the three-dimensional shape data 31 and the texture data 32 which are the user's privacy from being abused by a third party.

Note that, in the aforementioned embodiment, the interface 61 of the application system 41 perform the authentication processing by comparing the input authentication information with the security data stored in the memory 22. However, the authentication processing can be performed by the interface 21 of he recording device 2. As a result, it is unnecessary to bring the security data 33 out of the recording device 2, so that it is difficult for the dishonest user to steal the security data 33.

Next, with reference to the flow chart of Fig. 10, the processing to synthesize three-dimensional images in step S52 will be explained in detail. First, in step S91, the processing to deform the standard model in accordance with the feature parameters is executed. That is, the signal processing unit 53 applies the feature parameters stored in the memory 52 to the three-dimensional shape data of the standard model 55 stored in the storage unit 54 to restore the three-dimensional shape data of the body. Onto the restored three-dimensional data, the texture data are further mapped and the restored data are stored in the memory 52.

Incidentally, the feature parameters are data representing characteristics of a human body as described above, and as in the case of this example, when the body characteristics are applied for a television game, it is not always necessary to accurately restore the measured three-dimensional data. Reflecting the body characteristics is enough. Under the circumstances, the standard model 55 stored in the storage unit 54 and the standard model 16 stored in the storage unit 15 of the shape and texture data measuring device 1 do not have to be the same model. The standard model 16 stored in the storage unit 15 is a human model, but the standard model 55 stored in the storage unit 54 can be any other model for each game. For example, in the case where this standard model 55 is a model of a character such as "Godzilla" (trademark), the processing of step S91 restores a "Godzilla" resembling the user.

In the case where the data read out from the memory 22 of the recording device 2 are not the data of feature parameters but the three-dimensional shape data and the texture data, the processing of step S91 is unnecessary.

Next, the stage goes forward to step S92, and in accordance with the user's input, the processing to deform the three-dimensional shape is executed. That is, at this time, when the user manipulates the input unit 56, the three-dimensional image generator 57 deforms the three-dimensional shape data and the texture data supplied from the memory 52 in response to the manipulation. This causes for example the image of "Godzilla" to change in accordance with the user's input. Incidentally, this deforming processing needs to be executed on a real-time basis in the case of a game, but does not need to be executed on a real-time basis depending on applications.

Next, the stage goes forward to step S93, and with the technology of three-dimensional computer graphics the three-dimensional image generator 57 performs rendering on the image of the three-dimensional model deformed in accordance with the user's input, and then supplies the image data to the image display unit 58 for display.

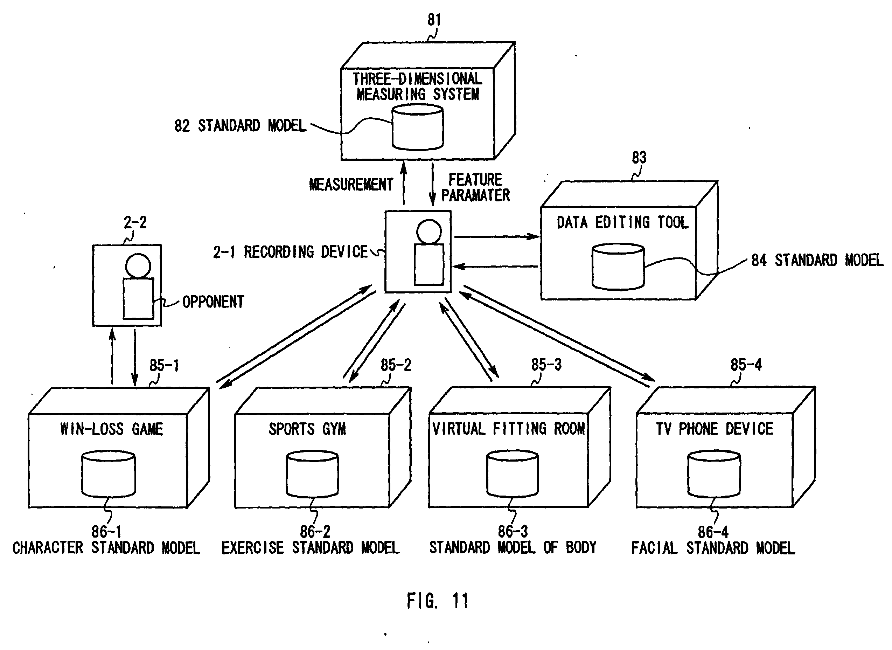

In the aforementioned explanation, the present invention is applied to a computer game, but can also be applied to other systems. Fig. 11 represents an example for this case. As shown in Fig. 11, the feature parameters measured by a three-dimensional measuring system 81 (which is equivalent to the shape and texture data measuring device 1 of Fig. 1) are recorded in a recording device 2-1.

In the case where another user (opponent) has recorded his own feature parameters in the recording device 2-2 similarly, the user of the recording device 2-1 and the user of the recording device 2-2 can generate characters respectively corresponding with them by applying their respective feature parameters to a character standard model 86-1 in a win-loss game 85-1 to enjoy the win-loss with those produced characters.

In addition, for example, it is possible that, for example, feature parameters recorded in the recording device 2-1 are applied to an exercise standard model 86-2 in a sports gym 85-2, and based on the produced three-dimensional model, training items or training schedules are planned so that the optimum training for the user is implemented efficiently.

Moreover, feature parameters of the recording device 2-1 are applied to a standard model of body 86-3 of a virtual fitting room 85-3 to generate a three-dimensional model, an optimum suit can be selected for that three-dimensional model. The user of the recording device 2-1 does not actually try on that suit, but by setting the standard model of body 86-3 and the standard model 82 as a corresponding standard model or a closer standard model, the same effect as in the case of actual fitting can be obtained.

Feature parameters of the user's face recorded in the recording device 2-1 are applied to a facial standard model 86-4 of the TV conference device 85-4 to generate the three-dimensional model, thus although the face is not the actual user's face, the facial image resembling it can be provided to the communicating party during a telephone talk. Of course, also in this case, by setting the facial standard model 86-4 and the standard model 82 to a corresponding model, the user's own image can be practically showed to the communicating party.

Other than the standard model 82 of the three-dimensional measuring system 81, in a data editing tool 83, any number of standard models 84 may be prepared so that feature parameters are edited based on this standard model 84 as required.

Incidentally, in the present invention, a system is to represent the entire device which is composed of a plurality of devices.

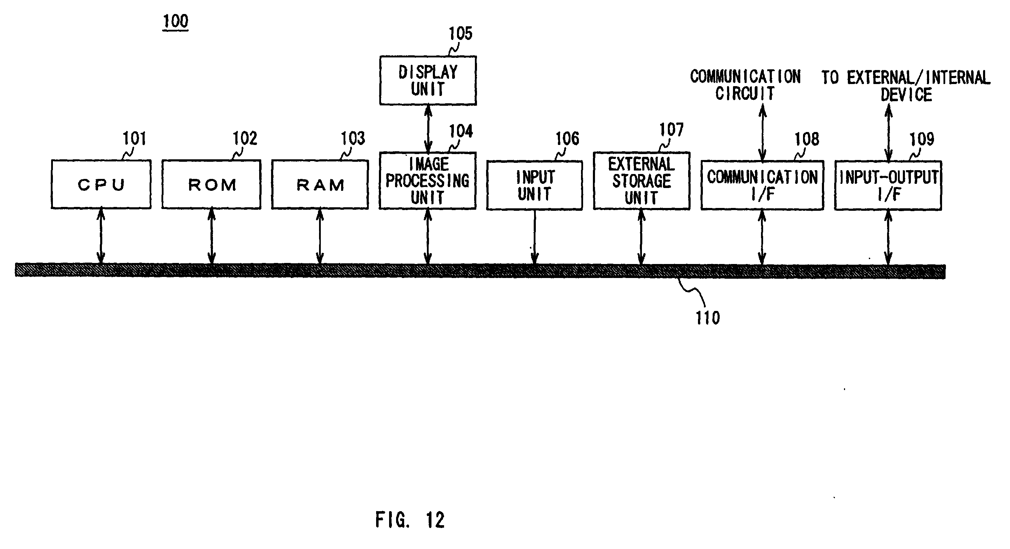

Next, the construction of hardware for the information processing device in the case where the shape and texture data measuring device 1 described with reference to Fig. 1 processes with software will be described with reference to Fig. 12.

In Fig. 12, an information processing device 100 corresponding to the shape and texture data measuring device 1 is composed of a CPU (central processing unit) 101 (corresponding to the signal processing unit 14) for executing processing programs, a ROM (read only memory) 102 which stores programs for executing the processing described with reference to Fig. 2 to Fig. 5, a RAM (random access memory) 103 (corresponding to the memory 13) for temporarily storing processing data, an image processing unit 104 for producing and storing an display image, a display unit 105 for displaying the image produced by the image processing unit 104, an input device 106 (corresponding to security information input device 12) including a mouse, a keyboard and a microphone which are used to input security information and instructions of a user, and an image input unit for inputting finger print information, an external storage unit 107 (corresponding to the storage unit 15), a communication I/F (Interface) 108 (corresponding to the interface 17) which is connected to a communication circuit to transmit/receive information to/from an external terminal device, and an input-output I/F (Interface) 109 (corresponding to the interface 17) which is connected to another external or internal device to input/output data. In addition, a bus 110 is also provided to connect circuits to each other so as to transmit programs and data. Here, the input-output I/F 109 is also connected to the three-dimensional shape and texture measuring equipment 11. The information processing device 100 takes measured data in the RAM 103 through the input-output I/F 109.

The external storage unit 107 is an information storage medium which can be randomly accessed, such as a magnetic disk and an optical disc. Further, the display unit 105 can display plural images with multi-window at the same time.

Note that, the processing programs according to the present invention are stored in the ROM 102. However, they can be stored in the external storage unit 107, and when being executed, they can be transferred to the RAM 103 through the bus 110 to be executed by the CPU 101. Further, the processing programs can be received from the external terminal device through the communication circuit by the communication I/F 108, and can be stored in the RAM 103 or the external storage unit 107 before being executed by the CPU 101.

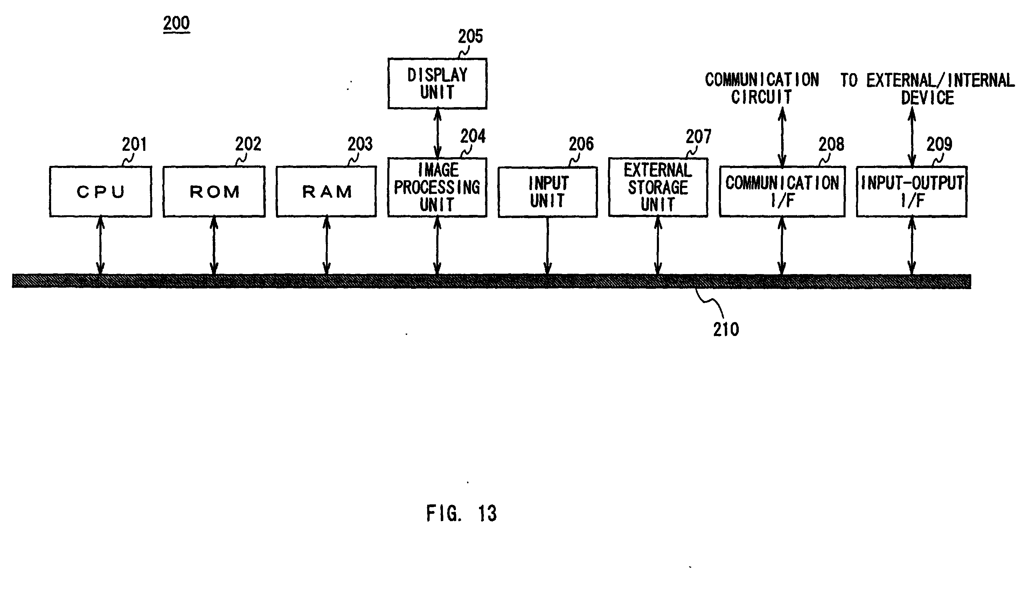

Next, the construction of hardware of the information processing device in the case of executing the processing of the application system 41 described with reference to Fig. 7 with software will be described with reference to Fig. 13.

In Fig. 13, an information processing device 200 corresponding to the application system 41 includes a CPU (central processing unit) 201 (corresponding to the signal processing unit 53) for executing processing programs, a ROM (read only memory) 202 which stores programs or executes processing described with reference to Fig. 8 to Fig. 10, a RAM (random access memory) 203 (corresponding to the memory 52) for temporarily storing processing data, an image processing unit 204 (corresponding to the three-dimensional image generator 57) for producing and storing a display image, a display unit 205 (corresponding to the image display unit 58) for display images produced by the image processing unit 204, an input unit 206 (corresponding to the authentication data input unit 62 and the input unit 56) including a mouse, a keyboard and a microphone which are used to input security data and control instructions of a user, and an image input device for inputting finger print information, an external storage unit 207 (corresponding to the storage unit 54) for storing the standard model 55, a communication I/F (interface) 208 (corresponding to the interface 61) which is connected to the communication circuit to transmit/receive information to/from the external terminal device), and an input-output I/F (interface) 209 (corresponding to the interface 61) which is connected to another external or internal device to input/output data. In addition, a bus 210 is provided to connect circuits to each other to transmit programs and data.

The external storage unit 207 is an information storage medium which can be randomly accessed, such as a magnetic disk and an optical disc. Further, the display unit 205 can display a plurality of images with multi-window.

Note that, the processing programs according to the present invention is stored in the EOM 202. However, they can be stored in the external storage unit 207, and when being executed, they can be transferred to the RAM 203 through the bus 210 to be executed by the CPU 201. In addition, the processing programs can be received by the communication I/F 208 through the communication circuit from the external terminal device, and stored in the RAM 203 or in the external storage unit 207 and then executed by the CPU 201.

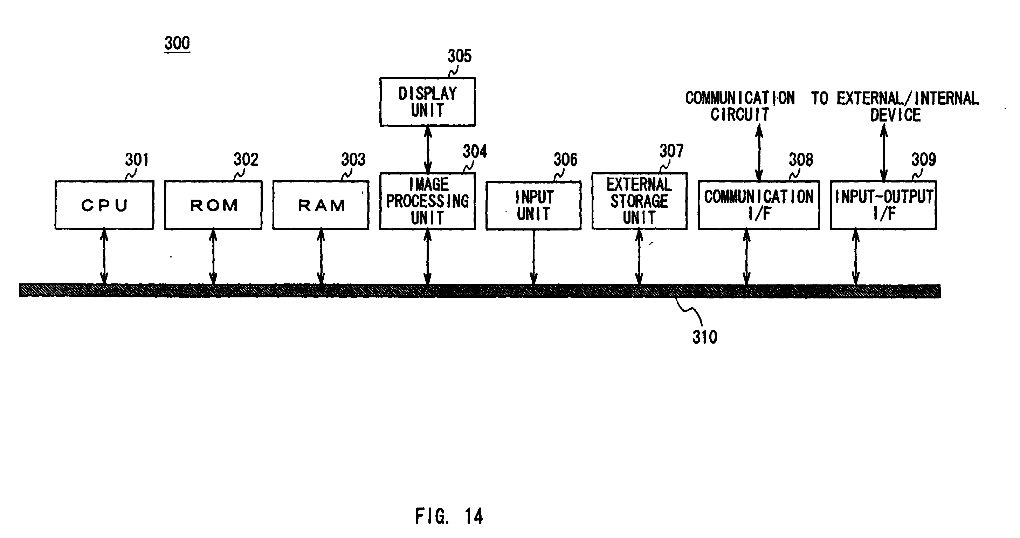

Next, the construction of hardware in the case where the recording device 2 described with reference to Fig. 1 and Fig. 7 is an information processing device (server) connected to the network will be described with reference to Fig. 14.

In Fig. 14, an information processing device 300 corresponding to the recording device 2 includes a CPU (central processing unit) 301 (corresponding to the interface 21) for executing processing programs, a ROM (read only memory) 302 (interface 21) which stores programs for executing processing, a RAM (random access memory) 303 for temporarily storing processing data, an image processing unit 304 for producing and storing a display image, a display unit 305 for display images produced by the image processing unit 304, an input unit 306 (corresponding to the interface 21) including a mouse and keyboard for inputting control instructions of a user, an external storage unit 307 (corresponding to memory 22) for storing the three-dimensional shape data 31, the texture data 32 and the security data 33, a communication I/F (interface) 308 which is connected to the communication circuit to transmit/receive information to/from an external terminal device, and an input-output I/F (interface) 309 (corresponding to the interface 21) which is connected to another external or internal device to input/output data. In addition, a bus is provided to connect circuits to each other to transmit programs and data.

The external storage unit 307 is an information storage medium which can be randomly accessed, such as a magnetic disk and an optical disc. Further, the display unit 305 can display a plurality of images with multi-window.

Note that, the processing programs according to the present invention are stored in the ROM 302. However, they can be stored in the external storage unit 307, and when being executed, can be transferred to the RAM 303 through the bus 310 to be executed by the CPU 301. In addition, the processing programs can be received by the communication I/F 308 from the external terminal device through the communication circuit and can be stored in the RAM 303 or in the external storage unit 307 before being executed by the CPU 301.

As an information providing medium to provide a user with computer programs for executing such processing mentioned above, a communication medium such as a network and satellite can be utilized, other than a recording medium such as a magnetic disk, a CD-ROM, and a solid memory.

As described above, according to the present invention, the three-dimensional information measured with the measuring device is stored and the stored three-dimensional information is protected from being read out, so that each user can easily and certainly utilize the three-dimensional information on his own body.

Further, according to another embodiment of this invention, the feature parameters produced by measuring three-dimensional shape and texture of a body and comparing it with the data of the three-dimensional model are recorded in the information recording device together with the protection information to protect the parameters from being read out, thus making it possible to provide the user with an information recording device which the user can utilize free under his own control.

Further, according to another embodiment of the present invention, the protection information read out from the information recording device and the inputted authentication information are utilized to perform the authentication processing, and the reading of the three-dimensional information from the information recording device is controlled in accordance with the authentication result, thus each user can safety and simply utilize his own three-dimensional information under his own supervision.

Furthermore, according to another embodiment of this invention, the measuring device measures the body three-dimensional shape, and the three-dimensional information produced based on the three-dimensional shape is recorded in the information recording device together with the protection information, and the information processing device authenticates the protection information, which is read out from the information recording device, and the input authentication information, reads out the three-dimensional information from the information recording device in accordance with the authentication result, and produces a three-dimensional image utilizing the read three-dimensional information, thus making it possible to realize a system in which each user can safety and simply utilize his own three-dimensional information under his supervision.

### Industrial Applicability

The present invention is applied to computer entertainment devices using computers, such as a computer game device.

### Explanation of Reference Numerals

1...shape and texture data measuring device, 2...recording device, 11...three-dimensional shape and texture measuring equipment, 12...security information input device, 13...memory, 14...signal processing unit, 15...storage unit, 16...standard model, 17, 21...interface, 22...memory, 31...three-dimensional shape data, 32...texture data, 33...security data, 41...application system, 51...input-output controller, 52...memory, 53...signal processing unit, 54...storage unit, 55...standard model, 56...input unit, 57...three-dimensional image generator, 58...image display unit, 61...interface, 62...authentication data input unit.

## Claims

1. An information recording device for recording three-dimensional information measured with a measuring device which measures the three-dimensional information on a body, comprising:
storage means for storing measured data based on the three-dimensional information measured by said measuring device and protection information for protecting said measured data from being read out; and
interface means for performing interface processing of storing the measured data based on the three-dimensional information output from said measuring device in said storage means and of reading out the measured data stored in said storage means to provide an external device.

2. The information recording device according to Claim 1, wherein
said protection information is enciphered.

3. The information recording device according to Claim 1, wherein
said protection information is information for specifying a person having a body of the three-dimensional information.

4. The information recording device according to Claim 3, wherein
said protection information is information showing the body characteristics of the person having the body of the three-dimensional information.

5. The information recording device according to Claim 4, wherein
said protection information is used as texture data of the three-dimensional information.

6. The information recording device according to Claim 4, wherein
said protection information is finger print information on the person having the body of the three-dimensional information.

7. The information recording device according to Claim 4, wherein
said protection information is voice information on the person having the body of the three-dimensional information.

8. The information recording device according to Claim 3, wherein
said protection information is a password set by the person having the body of three-dimensional information.

9. The information recording device according to Claim 1, wherein
said information recording device is a portable device.

10. The information recording device according to Claim 1, wherein
said storage means is a semiconductor memory.

11. The information recording device according to Claim 1, wherein
the three-dimensional information includes three-dimensional shape information and texture information on the body.

12. The information recording device according to Claim 1, wherein
said measured data includes parameters produced by comparing a standard three-dimensional model with the three-dimensional information.

13. The information recording device according to Claim 1, wherein
said measured data is hierarchically stored every part of the body.

14. The information recording device according to Claim 13, wherein
said measured data is hierarchically stored in accordance with the details of the parts of the body.

15. The information recording device according to Claim 1, wherein
said interface means receives the measured data from said measuring device through a communication circuit and provides the measured data for an external device through the communication circuit.

16. A measuring device for measuring three-dimensional information on a body and for outputting measured data based on the three-dimensional information to an information recording device, comprising:
measuring means for measuring the three-dimensional information on the body;
input means for inputting protection information for protecting the measured data based on the three-dimensional information on the body from being read out from said information recording device; and
interface means for outputting the measured data based on the three-dimensional information measured by said measuring means and the protection information input with said input means to said information recording device.

17. The measuring device according to Claim 16, further comprising:
storage means for storing data of standard three-dimensional models; and
producing means for producing feature parameters by comparing the three-dimensional information measured by said measuring means with data of the standard three-dimensional model, wherein
said interface means outputs the feature parameters and the protection information to said information recording device.

18. The measuring device according to Claim 16, wherein
said input means inputs information for specifying a person having a body of the three-dimensional information as protection information.

19. The measuring device according to Claim 18, wherein
said input means inputs information showing body characteristics of the person having the body of the three-dimensional information as the protection information.

20. The measuring device according to Claim 19, wherein
said input means inputs said protection information as texture data of the three-dimensional information.

21. The measuring device according to Claim 19, wherein
said input means inputs finger print information on the person having the body of the three-dimensional information as the protection information.

22. The measuring device according to Claim 19, wherein
said input means inputs voice information on the person of the body of the three-dimensional information as the protection information.

23. The measuring device according to Claim 18, wherein
said input means inputs a password set by the person having the body of the three-dimensional information as the protection information.

24. The measuring device according to Claim 16, wherein
said interface means is so constituted that said information recording device can be attached/detached.

25. The measuring device according to Claim 16, wherein
said measuring means measures the three-dimensional information and texture data about the body as the three-dimensional information.

26. The measuring device according to Claim 16, wherein
said interface means provides said information recording device with the measured data and the protection information through a communication circuit.

27. A measuring method of measuring three-dimensional information on a body and of outputting measured data based on the three-dimensional information to an information recording device, comprising:
a measuring step of measuring three-dimensional information on the body;
an input step of inputting protection information for protecting the measured data based on the three-dimensional information on the body from being read out from said information recording device; and
an output step of outputting the measured data based on the three-dimensional information measured by said measuring step and the protection information input at said input step to said information recording device.

28. The measuring method according to Claim 27, further comprising
a producing step of producing feature parameters by comparing the three-dimensional information measured by said measuring step with standard three-dimensional model data stored in a storage unit, wherein
said output step outputs the feature parameters and the protection information to said information recording device.

29. The measuring method according to Claim 27, wherein
said input step inputs information for specifying a person having the body of the three-dimensional information as the protection information.

30. The measuring method according to Claim 29, wherein
said input step inputs information showing the body characteristics of the person having the body of the three-dimensional information as the protection information.

31. The measuring method according to Claim 30, wherein
said input step inputs the protection information as texture data of the three-dimensional information.

32. The measuring method according to Claim 30, wherein
said input step inputs finger print information on the person having the body of the three-dimensional information as the protection information.

33. The measuring method according to Claim 30, wherein
said input step inputs voice information on the person having the body of the three-dimensional information as the protection information.

34. The measuring method according to Claim 29, wherein
said input step inputs a password set by the person having the body of the three-dimensional information as the protection information.

35. The measuring method according to Claim 27, wherein
said output step outputs the measured data and the protection information to said information recording device which is so constructed as to be attached/detached to/from an information processing device which executes said measuring method.

36. The measuring method according to Claim 27, wherein
said measuring step measures the three-dimensional information and texture data about the body as the three-dimensional information.

37. The measuring method according to Claim 27, wherein
said output step provides the measured data and the protection information for said information recording device through a communication circuit connected to an information processing device which executes said measuring method.

38. An information providing medium for measuring three-dimensional information on a body and for providing an information processing device with control information for outputting measured data based on the three-dimensional information to an information recording device, wherein:
said control information includes:
a measuring command to measure the three-dimensional information on the body;
an input command to input protection information for protecting the measured data based on the three-dimensional information on the body from being read out from said information recording device; and
an output command to output the measured data based on the three-dimensional information measured based on said measuring command and the protection information input based on said input command.

39. The information providing medium according to Claim 38, wherein:
the control information further includes a producing command to produce feature parameters by comparing the three-dimensional information measured based on said measuring command with the standard three-dimensional model data stored in a storage unit; and
said output command is a command to output the feature parameters and the protection information to said information recording device.

40. The information providing medium according to Claim 38, wherein
said input command is a command to input information for specifying the person having the body of the three-dimensional information as the protection information.

41. The information providing medium according to Claim 40, wherein
said input command is a command to input information showing the body characteristics of the person having the body of the three-dimensional information as the protection information.

42. The information providing medium according to Claim 41, wherein
said input command is a command to input the protection information as texture data of the three-dimensional information.

43. The information providing medium according to Claim 41, wherein
said input command is a command to input finger print information of the person having the body of the three-dimensional information as the protection information.

44. The information providing medium according to Claim 41, wherein
said input command is a command to input voice information of the person having the body of the three-dimensional information as the protection information.

45. The information providing medium according to Claim 40, wherein
said input command is a command to input a password set by the person having the body of the three-dimensional information as the protection information.

46. The information providing medium according to Claim 38, wherein
said output command is a command to output the measured data and the protection information to said information recording device which is so constructed as to be attached/detached to/from an information processing device which executes the control information.

47. The information providing medium according to Claim 38, wherein
said measuring command is a command to measure three-dimensional shape information and texture information on the body as the three-dimensional information.

48. The information providing medium according to Claim 38, wherein
said output command is a command to provide the measured data and the protection information for said information recording device through a communication circuit connected to an information processing device which executes said control information.

49. An information processing device for reading out measured data from an information recording device which records the measured data based on three-dimensional information on a body and protection information for protecting the measured data from being read out, and for performing prescribed processing, said information processing device comprising:
interface means for performing interface processing to read out the measured data and the protection information from said information recording device;
input means for inputting authentication information for authenticating the reading-out of the measured data from said information recording device;
authenticating means for reading out the protection information from said information recording device through said interface means and for performing authentication processing using the authentication information input by said input means;
control means for controlling the reading-out of the measured data from said information recording device in accordance with the authentication result by said authenticating means; and
processing means for performing prescribed processing utilizing the measured data which is read out from said information recording device through said interface means under the control of said control means.

50. The information processing device according to Claim 49, further comprising
storage means for recording standard three-dimensional model data, wherein:
the measured data includes feature parameters produced by being compared with a standard three-dimensional model; and
said processing means performs prescribed processing based on data produced by applying the feature parameters read out from said information recording device to the standard three-dimensional model data.

51. The information processing device according to Claim 50, wherein
said storage means stores model data different from the standard three-dimensional model which is used to produce the feature parameters recorded with said information recording device, as the standard three-dimensional model data.

52. The information processing device according to Claim 49, wherein
said input means inputs information for specifying a person having the body of the three-dimensional information as authentication information.

53. The information processing device according to Claim 52, wherein
said input means inputs information showing the body characteristics of the person having the body of the three-dimensional information as the authentication information.

54. The information processing device according to Claim 53, wherein
said input means inputs the authentication information as texture data of the three-dimensional information.

55. The information processing device according to Claim 53, wherein
said input means inputs finger print information of the person having the body of the three-dimensional information as the authentication information.

56. The information processing device according to Claim 53, wherein
said input means inputs voice information of the person having the body of the three-dimensional information as the authentication information.

57. The information processing device according to Claim 52, wherein
said input means inputs a password set by the person having the body of the three-dimensional information as the authentication information.

58. The information processing device according to Claim 49, wherein
said interface means is so constructed that said information recording device can be attached/detached.

59. The information processing device according to Claim 49, wherein
said measured data includes three-dimensional shape information and texture information on the body.

60. The information processing device according to Claim 49, wherein
said interface means receives the measured data and the protection information from said information recording device through an communication circuit.

61. The information processing device according to Claim 49, wherein:
said information recording device hierarchically stores the measured data every part of the body; and
said processing means selects and utilizes any hierarchy of measured data out of the measured data.

62. The information processing device according to Claim 49, wherein:
said information recording device hierarchically stores the measured data in accordance with the details of the parts of the body; and
said processing means selects and utilizes any hierarchy of measured data out of the measured data.

63. The information processing device according to Claim 49, wherein
said control means performs control to delete the measured data recorded with said information recording device, when said authenticating means detects the dishonest authentication result a predetermined number of times.

64. An information processing method of reading out measured data from an information recording device which records the measured data based on three-dimensional information on a body and protection information for protecting the measured data from being read out, to perform prescribed processing, said information processing method comprising:
an input step of inputting authentication information for authenticating the reading-out of the measured data from said information recording device;
an authenticating step of reading out the protection information from said information recording device and of performing authentication processing using the authentication information input at said input step;
a control step of controlling the reading-out of the measured data from said information recording device in accordance with the authentication result of said authenticating step; and
a processing step of performing prescribed processing using the measured data read out from said information recording device under the control of said control step.

65. The information processing method according to Claim 64, wherein:
said measured data includes feature parameters produced by being compared with a standard three-dimensional model; and
said processing step performs prescribed processing based on data produced by applying the feature parameters read out from said information recording device to the standard three-dimensional model data stored in a storage unit.

66. The information processing method according to Claim 65, wherein
the standard three-dimensional model data is model data different from the standard three-dimensional model used to produce the feature parameters recorded with said information recording device.

67. The information processing method according to Claim 64, wherein
said input step inputs information for specifying a person having the body of the three-dimensional information as the authentication information.

68. The information processing method according to Claim 67, wherein
said input step inputs information showing the body characteristics of the person having the body of the three-dimensional information as the authentication information.

69. The information processing method according to Claim 68, wherein
said input step inputs the authentication information as texture data of the three-dimensional information.

70. The information processing method according to Claim 68, wherein
said input step inputs finger print information on the person having the body of the three-dimensional information as the authentication information.

71. The information processing method according to Claim 68, wherein
said input step inputs voice information on the person having the body of the three-dimensional information as the authentication information.

72. The information processing method according to Claim 67, wherein
said input step inputs a password set by the person having the body of the three-dimensional information as the authentication information.

73. The information processing method according to Claim 64, wherein
said control step controls the reading-out of the measured data from said information recording device which is so constructed as to be attached/detached to/from an information processing device which executes said information processing method.

74. The information processing method according to Claim 64, wherein
said measured data includes three-dimensional shape information and texture information on the body.

75. The information processing method according to Claim 64, wherein
said control step receives the measured data from said information recording device through a communication circuit connected to an information processing device which executes said information processing method.

76. The information processing method according to Claim 64, wherein
said processing step selects and utilizes any hierarchy of measured data out of the measured data hierarchically stored every part of the body in said information recording device.

77. The information processing method according to Claim 64, wherein
said processing step selects and utilizes any hierarchy of measured data out of the measured data hierarchically stored in accordance with the details of the parts of the body in said information recording device.

78. The information processing method according to Claim 64, wherein
said control step performs control to delete the measured data recorded with said information recording device, when said authenticating step detects the dishonest authentication result a predetermined number of times.

79. An information providing medium for reading out measured data from an information recording device which records the measured data based on three-dimensional information on a body and protection information for protecting the measured data from being read out, and for providing an information processing device with control information for performing prescribed processing, wherein:
said control information includes:
an input command to input authentication information for authenticating the reading-out of the measured data from said information recording device;
an authenticating command to read out the protection information from said information recording device and to perform authentication processing utilizing the authentication information input based on said input command;
a control command to control the reading-out of the measured data from said information recording device in accordance with the authentication result based on the authenticating command; and
a processing command to perform prescribed processing utilizing the measured data read out from said information recording device under the control of said control command.

80. The information providing medium according to Claim 79, wherein:
the measured data includes feature parameters produced by being compared with a standard three-dimensional model; and
said processing command is a command to perform prescribed processing based on data produced by applying the feature parameters read out from said information recording device to the standard three-dimensional model data stored in a storage unit.

81. The information providing medium according to Claim 80, wherein
the standard three-dimensional model data is model data different from the standard three-dimensional model used to produce the feature parameters stored in said information recording device.

82. The information providing medium according to Claim 79, wherein
said input command is a command to input information for specifying the person having the body of the three-dimensional information as the authentication information.

83. The information providing medium according to Claim 82, wherein
said input command is a command to input information showing the body characteristics of the person having the body of the three-dimensional information as the authentication information.

84. The information providing medium according to Claim 83, wherein
said input command is a command to input the authentication information as texture data of the three-dimensional information.

85. The information providing medium according to Claim 83, wherein
said input command is a command to input finger print information on the person having the body of the three-dimensional information as the authentication information.

86. The information providing medium according to Claim 83, wherein
said input command is a command to input voice information on the person having the body of the three-dimensional information as the authentication information.

87. The information providing medium according to Claim 82, wherein
said input command is a command to input a password set by the person having the body of the three-dimensional information as the authentication information.

88. The information providing medium according to Claim 79, wherein
said control command is a command to control the reading-out of the measured data from said information recording device which is so constructed as to be attached/detached to/from an information processing device which executes the control information.

89. The information providing medium according to Claim 79, wherein
said measured data includes three-dimensional shape information and texture information on the body.

90. The information providing medium according to Claim 79, wherein
said control command is a command to receive the measured data from said information recording device through a communication circuit connected to an information processing device which executes the control information.

91. The information providing medium according to Claim 79, wherein
said processing command is a command to select and utilize any hierarchy of measured data out of the measured data hierarchically stored in said information recording device every part of the body.

92. The information providing medium according to Claim 79, wherein
said processing command is a command to select and utilize any hierarchy of measured data out of the measured data hierarchically stored in said information recording device in accordance with the details of the parts of the body.

93. The information providing medium according to Claim 79, wherein
said control command includes a command to control to delete the measured data recorded with said information device when the authentication result based on said authentication command is dishonest a predetermined number of times.

94. An information processing system composed of a measuring device for measuring three-dimensional information on a body, an information recording device for recording measured data based on the three-dimensional information measured by said measuring device, and an information processing device for reading out the measured data from said information recording device and performing prescribed processing, wherein:
said information recording device comprises:
first storage means for storing measured data based on the three-dimensional information measured by said measuring device and protection information for protecting the measured data from being read out; and
first interface means for performing interface processing of storing measured data based on the three-dimensional information output from said measuring device in said storage means and of reading out the measured data stored in said storage means to provide an external device; said measuring device comprises:
measuring means for measuring three-dimensional information on the body;
first input means for inputting protection information for protecting the measured data based on the three-dimensional information of the body from being read out from said information recording device; and
second interface means for outputting the measured data based on the three-dimensional information measured by said measuring means and protection information input by said input means, to said information recording device; and said information processing device comprises:
third interface means for performing interface processing of reading out the measured data and the protection information from said information recording device;
second input means for inputting authentication information for authenticating the reading-out of the measured data from said information recording device;
authenticating means for reading out the protection information from said information recording device through said interface means and for performing authentication processing utilizing the authentication information input by said input means;
control means for controlling the reading-out of the measured data from the information recording device in accordance with the authentication result of said authenticating means; and
processing means for performing prescribed processing utilizing the measured data read out from said information recording device through said interface means under the control of said control means.

95. An information processing method in an information processing system composed of a measuring device for measuring three-dimensional information on a body, an information recording device for recording measured data based on the three-dimensional information measured by said measuring device, and an information processing device for reading out the measured data from said information recording device and performing prescribed processing, wherein:
an information processing method of said measuring device comprises:
a measuring step of measuring three-dimensional information on the body;
a first input step of inputting protection information for protecting the measured data based on the three-dimensional information on the body from being read out from said information recording device; and
an output step of outputting the measured data based on the three-dimensional information measured by said measuring step and the protection information input at said input step, to said information recording device; and
an information processing method of said information processing device comprises:
a second input step of inputting authentication information for authenticating the reading-out of the measured data from said information recording device;
an authenticating step of reading out the protection information from said information recording device and of performing authentication processing utilizing the authentication information input at said input step;
a control step of controlling the reading-out of the measured data from said information recording device in accordance with the authentication result of said authenticating step; and
a processing step of performing prescribed processing utilizing the measured data read out from said information recording device under the control of said control step.

96. An information providing medium for providing control information for executing processing for an information processing system composed of a measuring device for measuring three-dimensional information on a body, an information recording device for recording measured data based on the three-dimensional information measured by said measuring device, and an information processing device for reading out the measured data from said information recording device and performing prescribed processing, wherein:
control information which is provided said measured device includes:
a measuring command to measuring three-dimensional information on the body;
a first input command to input protection information for protecting the measured data based on the three-dimensional information on the body from being read out from said information recording device; and
an output command to output the measured data based on the three-dimensional information measured by said measuring step and the protection information input at said input step, to said information recording device; and
control information which is provided said information processing device comprises:
a second input command to input authentication information for authenticating the reading-out of the measured data from said information recording device;
an authenticating command to read out the protection information from said information recording device and to perform authentication processing utilizing the authentication information input at said input step;
a control command to control the reading-out of the measure data from said information recording device in accordance with the authentication result of said authenticating step; and
a processing command to perform prescribed processing utilizing the measured data read out from said information recording device under the control of said control step.
